# EUROPÄISCHE PATENTSCHRIFT

(11) **EP 1 746 335 B1**
(45) Veröffentlichungstag und Bekanntmachung des Hinweises auf die Patenterteilung: **19.11.2008**
(21) Anmeldenummer: 06014482.1
(22) Anmeldetag: 12.07.2006
(51) Int. Cl.: F16P 3/14, B30B 15/28, B21D 55/00, G01V 8/12

(54) **Verfahren zur Sicherung einer Biegepresse und optoelektronischer Sensor zur Durchführung eines solchen Verfahrens**
Method for securing a bending machine and optoelectronic sensor for carrying out the method
Procédé pour sécuriser une presse à plier et capteur optoélectronique pour la mise en ouvre d'un tel procédé

(30) Priorität: 21.07.2005 DE 102005034124
(43) Veröffentlichungstag der Anmeldung: 24.01.2007
(73) Patentinhaber: SICK AG, 79183 Waldkirch (DE)
(72) Erfinder: Grabinger, Jörg, 79312 Emmendingen (DE); Beier, Christian, 79194 Gundelfingen (DE)
(74) Vertreter: Manitz, Finsterwald & Partner GbR

(56) Entgegenhaltungen:
- EP-A- 1 522 879
- EP-A2- 1 191 352
- EP-A2- 1 258 667
- DE-A1- 10 309 399
- DE-A1- 10 327 388
- DE-A1- 10 353 353
- DE-A1- 19 707 417
- DE-U1- 20 217 426
- DE-U1- 29 900 149

## Beschreibung

Die Erfindung betrifft ein Verfahren zur Sicherung einer Biegepresse mit einem ersten Werkzeugteil, das im Rahmen einer Arbeitssequenz mehrere aufeinander folgende, jeweils einem Biegen eines Werkstücks dienende Arbeitsschritte in Richtung eines zweiten Werkzeugteils ausführt, wobei ein optoelektronischer Sensor ein volumenförmiges, im Bereich eines zwischen den Werkzeugteilen ausgebildeten Öffnungsspalts vorgesehenes Schutzfeld überwacht, welches bei aufeinander folgenden Arbeitsschritten einer Arbeitssequenz voneinander verschiedene Abmessungen aufweist.

Bei der genannten Biegepresse handelt es sich typischerweise um eine Gesenkpresse zum Biegen, Abkanten, Schneiden oder Stanzen von Werkstücken, wie z.B. Blechteilen. Das genannte erste Werkzeugteil ist in diesem Fall durch ein Oberwerkzeug gebildet, das eine längliche Biegelinie oder Schnittkante besitzt. Dieses Oberwerkzeug wird während seiner Arbeitsbewegung bzw. während eines jeden Arbeitsschrittes vertikal nach unten gegen ein Unterwerkzeug bewegt, das als zweites Werkzeugteil dient und an dem das Werkstück an- oder aufliegt.

Für jeden der aufeinander folgenden Arbeitsschritte muss zu Beginn des jeweiligen Arbeitsschrittes das Werkstück in der jeweils erforderlichen Weise im Öffnungsspalt zwischen den Werkzeugteilen positioniert werden.

Dies erfolgt in der Regel manuell durch eine Bedienperson. Um während des Schließens des Öffnungsspalts bzw. während der Durchführung eines Arbeitsschritts eine Verletzung, insbesondere der Hände der Bedienperson, durch eine gefahrbringende Bewegung eines Teils der Werkzeugmaschine zu vermeiden, überwacht der optoelektronische Sensor ein Schutzfeld, das sich typischerweise unterhalb des bewegten Oberwerkzeugs erstreckt. Dieses Schutzfeld ist volumenförmig, d.h. zumindest sein Umriss erstreckt sich entlang eines zweidimensionalen Querschnitts, so dass der optoelektronische Sensor auf gefahrbringende Eingriffe aus verschiedenen Richtungen schnell und zuverlässig reagieren und ein Anhalten der gefahrbringenden Bewegung auslösen kann.

Der beschriebene Schutzmechanismus muss insbesondere auch dann funktionieren, wenn ein einzelnes Werkstück im Rahmen einer Arbeitssequenz durch mehrere aufeinander folgende Arbeitsschritte bearbeitet wird, wobei nach Abschluss eines Arbeitsschritts und vor Beginn eines nächsten Arbeitsschritts eine neue Positionierung des Werkstücks in der Werkzeugmaschine vorgenommen werden muss. Dazu ist es nötig, beispielsweise beim Biegen eines Kastens, das jeweilige Schutzfeld von Arbeitsschritt zu Arbeitsschritt zu variieren, da bei auf einen ersten Arbeitsschritt folgenden Arbeitsschritten ein bereits teilweise gebogener Kasten in das während des ersten Arbeitsschritts gültige Schutzfeld hineinragen kann, was dann zu einem ungewollten Abschalten der Werkzeugmaschine führen würde. Dementsprechend ist es bekannt, aufeinander folgenden Arbeitsschritten einer Arbeitssequenz voneinander verschiedene Schutzfelder zuzuordnen, um so einen reibungslosen und weitgehend unterbrechungsfreien Ablauf der Arbeitssequenz zu ermöglichen.

Nachteilig an dieser Vorgehensweise ist die Tatsache, dass durch die erforderliche Verkleinerung des Schutzfeldes bei auf den ersten Arbeitsschritt folgenden Arbeitsschritten bestimmte deaktivierte Bereiche nicht mehr überwacht werden können, so dass in diesen Bereichen keine ausreichende Sicherheit für die jeweilige Bedienperson gegeben ist.

Aus der DE 299 00 149 U1 ist eine Lichtschrankenanordnung mit optoelektronischen Sensoren und eine damit verbundene Überwachungseinheit bekannt, wobei die Überwachungseinheit unter anderem einen Mikrorechner mit einer Datenschnittstelle aufweist. Über diese Datenschnittstelle können mittels eines externen Diagnosegeräts Daten über aktuell von den Sensoren gelieferte Signale und in einem Datenspeicher gespeicherte Daten abgerufen werden.

Die Aufgabe der Erfindung besteht darin, ein Verfahren zur Durchführung eines solchen Verfahrens bereitzustellen, mit welchem die Sicherheit von Bedienpersonen bei der Durchführung von mehrere aufeinander folgende Arbeitsschritte aufweisenden Arbeitssequenzen erhöht wird. Dabei soll gleichzeitig sichergestellt werden, dass die Arbeitssequenz auf wirtschaftlich vorteilhafte Weise in möglichst kurzer Zeit abgearbeitet werden kann, ohne dabei die Sicherheit der Bedienpersonen zu beeinträchtigen.

Diese Aufgabe wird nach einem erfindungsgemäßen Verfahren durch die Merkmale des Anspruchs 1 und insbesondere dadurch gelöst, dass für jeden Arbeitsschritt ein Parametersatz gespeichert wird, welcher neben den Abmessungen des Schutzfeldes noch zumindest einen weiteren Parameter, nämlich den für den jeweiligen Arbeitsschritt erwarteten Schattenriss des Werkstücks im Bereich des Öffnungsspalts, aufweist, wobei in Abhängigkeit von den gespeicherten Parametern eine Ansteuerung der Biegepresse erfolgt.

Erfindungsgemäß wird also für jeden Arbeitsschritt nicht nur ein Schutzfeld mit jeweils geeigneten Abmessungen eingestellt, sondern es wird im Rahmen eines Parametersatzes zusätzlich zu den Abmessungen des Schutzfeldes zumindest noch ein weiterer Parameter bereitgestellt, welcher Auswirkungen auf die Ansteuerung der Werkzeugmaschine und/oder das jeweilige Schutzfeld besitzt. Konkret wird als weiterer Parameter die für den jeweiligen Arbeitsschritt erwartete Höhe des Schattenrisses des Werkstücks im Bereich des Öffnungsspalts gewählt, und zwar betrachtet aus einer Richtung, die parallel zur optischen Achse des Sensors verläuft. Wenn nämlich z.B. diese Höhe als weiterer Parameter hinterlegt ist, kann beispielsweise in demjenigen Augenblick, zu dem das erste Werkzeugteil bei der Durchführung eines Arbeitsschrittes die genannte Höhe erreicht, durch geeignete Maßnahmen dafür gesorgt werden, dass die Sicherheit einer Bedienperson auch dann noch gegeben ist, wenn sie in einem solchen Bereich des Öffnungsspalts agiert, dem aufgrund der jeweiligen Form des Werkstücks kein aktives Schutzfeld mehr zugeordnet ist. Dies kann z.B. dadurch erreicht werden, dass die Geschwindigkeit des ersten Werkzeugteils verlangsamt wird, sobald es die genannte Höhe des Schattenrisses des Werkstücks im Bereich des Öffnungsspalts erreicht. Bei einer solchen verlangsamten Bewegung bleibt der Bedienperson nämlich ausreichend Zeit, um auf gefährliche Situationen rechtzeitig zu reagieren.

Die für die einzelnen Arbeitsschritte hinterlegten Parametersätze sind in der Regel voneinander verschieden, können aber für bestimmte Arbeitsschritte auch identisch zueinander sein. Ein zusätzlicher Vorteil der Erfindung besteht auf jeden Fall darin, dass nicht jeder Parametersatz separat von einer Bedienperson am Anfang eines jeden der aufeinander folgenden Arbeitsschritte aktiviert werden muss. Vielmehr werden die hinterlegten Parametersätze bei Auslösung der aufeinander folgenden Arbeitsschritte automatisch einzeln nacheinander in der korrekten Reihenfolge aktiviert, so dass sichergestellt ist, dass für jeden Arbeitsschritt der korrekte Parametersatz aktiv ist.

Generell ist es im Rahmen der Erfindung möglich, die Geschwindigkeit des ersten Werkzeugteils zu beliebigen, jeweils sinnvollen Zeitpunkten während der Durchführung eines Arbeitsschritts zu verringern. Insbesondere kann eine Verringerung der Geschwindigkeit auch bereits dann sinnvoll sein, wenn sich das erste Werkzeugteil noch etwas oberhalb der Höhe des Schattenrisses des Werkstücks befindet.

Vorteilhaft ist es ferner, wenn als weiterer Parameter der für den jeweiligen Arbeitsschritt typischen Parametersätze jeweils eine Maximalgeschwindigkeit des ersten Werkzeugteils bei teilweise oder komplett deaktiviertem Schutzfeld gespeichert wird. Eine solche Maximalgeschwindigkeit kann beispielsweise im Bereich von 10 mm/ s liegen. Die jeweils zulässige Maximalgeschwindigkeit kann für voneinander verschiedene Arbeitsschritte unterschiedlich eingestellt und an die bei Durchführung des jeweiligen Arbeitsschritts jeweils vorhandenen Gegebenheiten angepasst werden. Auf diese Weise lässt sich die Geschwindigkeit der gesamten Arbeitssequenz optimieren, wobei gleichzeitig sichergestellt wird, dass sich das erste Werkzeugteil niemals so schnell bewegt, dass durch einen Eingriff einer Bedienperson in einen augenblicklich gerade deaktivierten Bereich des Schutzfeldes eine Verletzungsgefahr gegeben ist.

Besonders bevorzugt ist es, wenn als weiterer Parameter der für den jeweiligen Arbeitsschritt typischen Parametersätze ein an den jeweiligen Arbeitsschritt angepasstes Geschwindigkeitsprofil des ersten Werkzeugteils gespeichert wird. Es kann also hier im Rahmen der Parametersätze festgelegt werden, wie die Geschwindigkeit des ersten Werkzeugteils während der Durchführung eines Arbeitsschritts in beliebiger Weise zu erhöhen oder erniedrigen ist, um hier jeweils die optimale Balance zwischen Sicherheit der Bedienperson und Geschwindigkeit des gerade ablaufenden Arbeitsschritts zu finden. Dabei kann jeder Arbeitsschritt aufgrund des jeweils zugeordneten Geschwindigkeitsprofils individuell optimiert werden. Im Rahmen des Geschwindigkeitsprofils werden Geschwindigkeiten entweder in Abhängigkeit von der während eines Arbeitsschritts bereits verstrichenen Zeit oder in Abhängigkeit von der Position des ersten Werkzeugteils gespeichert.

Das Schutzfeld kann in Abhängigkeit von den gespeicherten Parametern zu bestimmten Zeitpunkten eines Arbeitsschritts oder bei bestimmten Positionen des ersten Werkzeugteils vollständig oder teilweise deaktiviert werden. Beispielsweise können die für das jeweils wirksame Schutzfeld maßgeblichen Parameter so ausgestaltet sein, dass sich das Schutzfeld gemeinsam mit dem zwischen dem ersten Werkzeugteil einerseits und der Oberkante des Werkstücks bzw. seinem Schattenriss andererseits bestehenden Öffnungsspalt verkleinert, so dass tatsächlich immer nur der jeweils kritische Bereich überwacht wird. Ferner können insbesondere beim Kastenbiegen bestimmte Schutzfeldbereiche dynamisch deaktiviert bzw. ausgeblendet werden, wenn sich während eines Biegevorgangs Teile des Kastens in Bereiche hinein bewegen, in denen das Schutzfeld zu Beginn des jeweiligen Arbeitsschritts noch aktiv war.
Schließlich ist es beispielsweise auch möglich, das Schutzfeld komplett zu deaktivieren, sobald das erste Werkzeugteil die Höhe des Schattenrisses des Werkstücks im Bereich des Öffnungsspalts erreicht hat. Bei einem derart deaktivierten Schutzfeld muss dann - wie bereits erwähnt - beispielsweise durch eine verringerte Geschwindigkeit für eine ausreichende Sicherheit der Bedienperson gesorgt werden.

Besonders vorteilhaft ist es, wenn als weiterer Parameter der Parametersätze ein für den jeweiligen Arbeitsschritt typisches Aktivierungssignal gespeichert wird. Hierdurch kann sichergestellt werden, dass ein bestimmter Arbeitsschritt von einer Bedienperson nur dann aktiviert werden kann, wenn von der Bedienperson ein ganz bestimmtes Aktivierungssignal ausgelöst wird. Beispielsweise kann ein herkömmlicher Arbeitsschritt, bei dem durch ein ausreichend großes Schutzfeld stets für die Sicherheit der Bedienperson gesorgt wird, durch eine einmalige Betätigung eines Fußschalters ausgelöst werden. Bei einem für die Bedienperson gefährlicheren Arbeitsschritt kann dann jedoch in dessen Parametersatz hinterlegt sein, dass für die Auslösung eine zweimalige Betätigung des Fußschalters nötig ist. Ein Fußschalter ist an dieser Stelle lediglich beispielhaft genannt. In der Praxis können beliebige andere Eingabemedien, insbesondere auch computergestützte Eingabesteuerungen, zum Einsatz gelangen.

Die Parametersätze einer Arbeitssequenz sind bevorzugt nur in einer definierten Reihenfolge, insbesondere durch die Steuerung der Biegepresse, aktivierbar. Auf diese Weise kann sichergestellt werden, dass die Arbeitsschritte einer Arbeitssequenz unter Berücksichtigung der jeweils zugeordneten Parametersätze immer nur in der jeweils passenden Reihenfolge zeitlich nacheinander durchgeführt werden können. In diesem Zusammenhang ist es auch sinnvoll, wenn die Parametersätze als weiteren Parameter einen Zeiger auf den jeweils nächsten Arbeitsschritt umfassen.

Weitere bevorzugte Ausführungsformen des erfindungsgemäßen Verfahrens sind in den Unteransprüchen beschrieben.

Die Erfindung wird nachfolgend anhand von Ausführungsbeispielen unter Bezugnahme auf die Zeichnungen erläutert; in diesen zeigen:
- Fig. 1: eine schematische Frontansicht einer Biegepresse,
- Fig. 2: eine schematische Seitenansicht von Teilen der Biegepresse gemäß Fig. 1,
- Fig. 3: eine perspektivische Ansicht eines Werkstücks nach Durchführung von zwei Biegeschritten und vor Durchführung eines dritten Biegeschritts,
- Fig. 4: ein in eine Biegepresse eingelegtes Werkstück gemäß Fig. 3,
- Fig. 5: eine perspektivische Ansicht eines Werkstücks gemäß den Fig. 3 und 4 nach Durchführung des dritten Biegeschritts,
- Fig. 6a bis 6c: jeweils eine Draufsicht auf ein weiteres Werkstück in verschiedenen Verfahrensstadien einer Biegesequenz, und
- Fig. 7a bis 7d: ein in eine Biegepresse eingelegtes Werkstück gemäß den Fig. 6a bis 6c in verschiedenen Verfahrensstadien einer Biegesequenz.

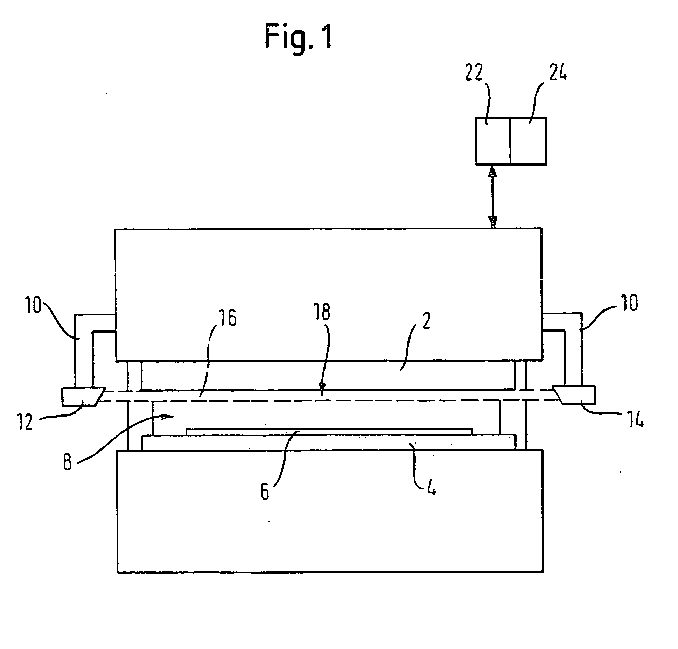

Die in Fig. 1 gezeigte Biegepresse besitzt ein Oberwerkzeug bzw. einen Pressbalken 2, das bzw. der zu einer Arbeitsbewegung vertikal nach unten gegen ein Unterwerkzeug 4 angetrieben werden kann, um ein auf dem Unterwerkzeug 4 aufliegendes Werkstück 6 zu biegen. Während dieser Arbeitsbewegung wird ein Öffnungsspalt 8 zwischen dem Oberwerkzeug 2 und dem Werkstück 6 allmählich geschlossen.

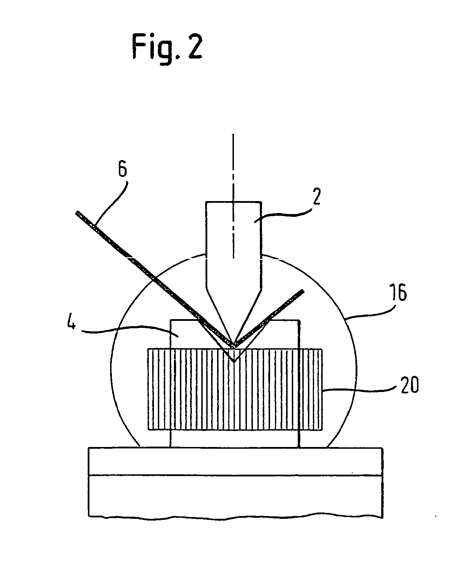

An den beiden Seiten des Pressbalkens 2 ist jeweils ein Haltearm 10 vorgesehen. Die Haltearme 10 tragen eine Sendeeinrichtung 12 und eine ortsauflösende Empfangseinrichtung 14, die Teile eines optoelektronischen Sensors und zum Oberwerkzeug 2 ausgerichtet sind. Die Sendeeinrichtung 12 besitzt eine z.B. als LED oder Laserdiode ausgebildete Lichtquelle mit einer Sendeoptik (in den Figuren nicht gezeigt), die das Sendelicht der Lichtquelle zu einem Lichtstrahl 16 aufweitet. In meisten Anwendungsfällen der Erfindung ist es sinnvoll, den Lichtstrahl 16 derart aufzuweiten, dass z.B. auch Teile des Oberwerkzeugs 2 vom Lichtstrahl 16 erfasst werden (siehe auch Fig. 2). Die Empfangseinrichtung 14 besitzt einen rechteckigen, z.B. in CMOS-, CID-, CCD-Technik oder dergleichen ausgebildeten Matrix-Empfänger, der von dem Lichtstrahl 16 beaufschlagt wird und der so bemessen ist, dass der Lichtstrahl mit seinem vollen Querschnitt auf den Empfänger auftrifft.

Der Lichtstrahl 16 durchquert den Öffnungsspalt 8 unterhalb des Oberwerkzeugs 2. Der Umriss eines entsprechend aktivierten Teils der Empfangseinrichtung 14 definiert innerhalb des Lichtstrahls 16 ein volumenförmiges Schutzfeld 18 zwischen dem Oberwerkzeug 2 und dem Unterwerkzeug 4, wie nachfolgend in Verbindung mit Fig. 2 noch erläutert wird. Sobald eine Auswerte- und Steuereinrichtung des Sensors (in den Figuren nicht gezeigt) eine Unterbrechung des Lichtstrahls 16 innerhalb des jeweils aktiven Schutzfelds 18 detektiert, löst sie einen Abschaltvorgang zum Anhalten des Oberwerkzeugs 2 aus. Dadurch wird eine Bedienperson, die beispielsweise das Werkstück 6 in den Öffnungsspalt 8 einführt und dort fixiert, vor Verletzungen durch das Oberwerkzeug 2 geschützt.

Die Biegepresse gemäß Fig. 1 wird von einer Steuereinheit 22 beaufschlagt, welche mit einem Speicher 24 zusammenwirkt, in dem z.B. diejenigen Parameter der erfindungsgemäßen Parametersätze abgelegt sind, die letztlich für die Steuerung der Biegepresse maßgeblich sind (z.B. die Notwendigkeit einer zweimaligen Betätigung eines Fußschalters zur Auslösung eines bestimmten Arbeitsschritts). Weitere Parameter der erfindungsgemäßen Parametersätze, welche z.B. die Ausbildung und Auswertung des jeweiligen Schutzfeldes 18 betreffen, können in einem Speicher der Empfangseinrichtung 14 abgelegt sein.

Die Steuereinheit 22 sowie eine weitere, in die Empfangseinrichtung 14 integrierte Steuereinheit kontrollieren unter wechselseitigem Datenaustausch konkret die Bewegungen des Oberwerkzeugs 2, stellen die Form sowie die Abmessungen des Schutzfelds 20 (siehe Fig. 2) ein und verarbeiten die von der Empfangseinrichtung 14 gelieferten Signale.

Nachfolgend wird anhand der Fig. 2 die Funktionsweise der erfindungsgemäß ausgestatteten Biegepresse gemäß Fig. 1, welche mit einem gegenüber Fig. 1 stärker aufgeweiteten Lichtstrahl 16 arbeitet, erläutert.

Fig. 2 zeigt das Oberwerkzeug 2, das Unterwerkzeug 4, das darauf aufliegende Werkstück 6 und den im Querschnitt kreisrunden Lichtstrahl 16 in einer schematischen Seitenansicht.

Die Empfangseinrichtung 14 mit ihrer Empfangsmatrix ist derart bemessen, dass der in der Figur 2 dargestellte Lichtstrahl 16 mit seinem vollen Querschnitt auf die Empfangseinrichtung 14 auftrifft, so dass mittels der Empfangsmatrix detektiert werden kann, ob der Lichtweg zwischen Lichtsender 12 und Lichtempfänger 14 an einer beliebigen Stelle des Lichtstrahls 16 unterbrochen ist. Diese Informationen, die von den einzelnen Empfangselementen der Empfangsmatrix geliefert werden, gelangen erfindungsgemäß zur in der Empfangseinrichtung 14 vorhandenen Steuereinheit, welche diese Informationen in der jeweils erforderlichen Weise verarbeitet.

Diejenigen Empfangselemente, die dem in Figur 2 beispielhaft dargestellten, rechteckigen, unterhalb des Oberwerkzeugs 2 angeordneten Schutzfeld 20 zugeordnet sind, liefern Signale, die immer dann zu einem Abschalten der Biegepresse führen, wenn der Lichtstrahl 16 in einem dem jeweiligen Schutzfeld 20 entsprechenden Teilbereich unterbrochen wird. Das Schutzfeld 20 kann dabei zu verschiedenen Zeitpunkten innerhalb eines Arbeitsschritts oder bei aufeinander folgenden Arbeitsschritten einer Arbeitssequenz innerhalb des Lichtstrahls 16 unterschiedliche Abmessungen und Formen besitzen, die unter anderem abhängig von den erfindungsgemäßen Parametersätzen sind. Die unterschiedlichen Abmessungen und Formen des Schutzfeldes 20 können beispielsweise dadurch eingestellt werden, dass immer nur die jeweils gewünschten Empfangselemente der Empfangsmatrix aktiv sind.

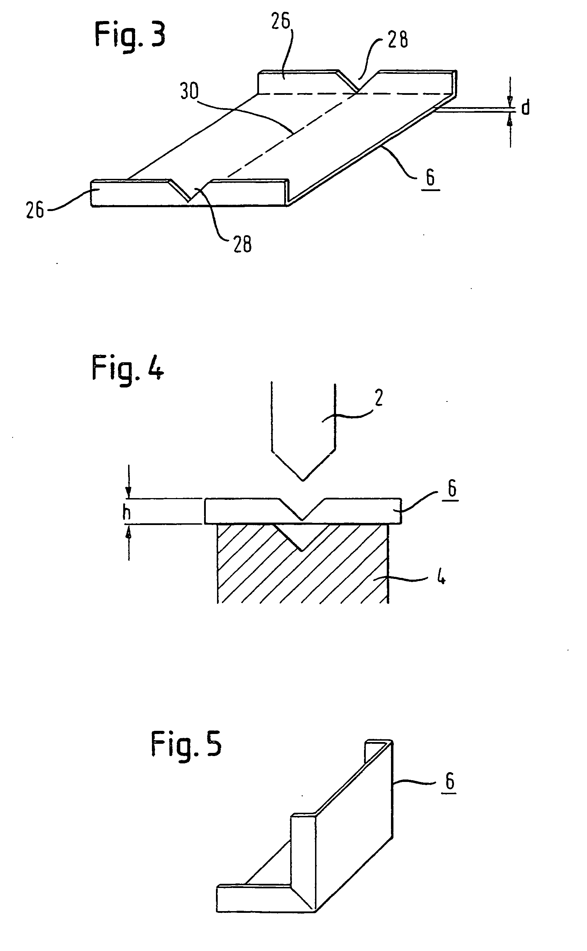

Das Werkstück 6 gemäß Fig. 3 besteht aus einem flachen Blech der Dicke d, welches im Rahmen von zwei bereits durchgeführten Arbeitsschritten bzw. Biegeschritten an zwei einander gegenüberliegenden Endseiten um 90° nach oben gebogen wurde. Die beiden nach oben gebogenen Abschnitte 26 des Werkstücks 6 weisen jeweils im Bereich ihrer Mitte einen keilförmigen Ausschnitt 28 auf, welcher es ermöglicht, dass das Werkstück 6 im Rahmen eines dritten Biegeschritts entlang seiner in Fig. 3 gestrichelt dargestellten Längsmittel- bzw. Biegelinie 30 nochmals um 90° in der Weise gebogen wird, dass sich letztlich ein Gebilde gemäß Fig. 5 ergibt.

Bei Durchführung der ersten beiden Biegeschritte, in denen die Werkstückabschnitte 26 um 90° nach oben gebogen wurden, kann das Oberwerkzeug einer Biegepresse bei aktiviertem Schutzfeld vergleichsweise schnell in Richtung eines Unterwerkzeugs bewegt werden, bis sich das Oberwerkzeug kurz vor der Oberseite des Werkstücks 6 befindet. In der Folge wird dann das Oberwerkzeug mit verlangsamter Geschwindigkeit weiterbewegt, wobei während dieser Weiterbewegung des Schutzfeld deaktiviert ist, da das Werkstück 6 selbst bei dieser fortgesetzten Bewegung bei aktiviertem Schutzfeld zu einem unerwünschten Schutzfeldeingriff führen würde.

Maßgeblich für den Zeitpunkt der Verlangsamung der Bewegung des Oberwerkzeugs ist dementsprechend die Dicke d des Werkstücks 6, da spätestens dann, wenn sich die Unterkante des Oberwerkzeugs in einem Abstand von der Dicke d vom Unterwerkzeug befindet, das Schutzfeld deaktiviert werden muss, um einen unerwünschten Eingriff durch das Werkstück 6 zu vermeiden. Zu diesem Zeitpunkt muss dann auch die Geschwindigkeit des Oberwerkzeugs verlangsamt werden, um Verletzungen der Bedienperson auszuschließen.

Erfindungsgemäß werden also für die ersten beiden, gemäß Fig. 3 bereits durchgeführten Biegeschritte zur Erzeugung der hochgeklappten Abschnitte 26 jeweils Parametersätze abgespeichert, welche festlegen, dass bei Erreichen eines Abstands d zwischen der Unterkante des Oberwerkzeugs und dem Unterwerkzeug das Schutzfeld deaktiviert und die Geschwindigkeit des Oberwerkzeugs verlangsamt wird.

Wenn nun im Rahmen des dritten Biegeschritts ein Biegen des Werkstücks 6 entlang der Längsmittellinie 30 erfolgen soll, muss das Werkstück 6 gemäß Fig. 4 in eine Biegepresse 2, 4 eingelegt werden. Aufgrund der beiden hochgeklappten Abschnitte 26 weist das Werkstück 6 bzw. dessen Schattenriss im Bereich des zwischen Oberwerkzeug 2 und Unterwerkzeug 4 ausgebildeten Öffnungsspalts nun eine Höhe h auf, was letztlich bedeutet, dass das Werkstück 6 im Rahmen des dritten Biegeschritts vom optoelektronischen Sensor 12, 14 (siehe Fig. 1) mit einer größeren "Dicke" h wahrgenommen wird als während der ersten beiden Biegeschritte, bei denen das Werkstück 6 mit der Dicke d (siehe Fig. 3) erschien.

Da der optoelektronische Sensor 12, 14 nicht detektieren kann, ob sich die Hand einer Bedienperson zwischen den beiden hochgeklappten Abschnitten 26, also gewissermaßen im Schatten eines der Abschnitte 26, befindet, muss der erfindungsgemäße Parametersatz für den dritten Biegeschritt derart ausgestaltet sein, dass eine Deaktivierung des Schutzfelds und eine Verlangsamung des Oberwerkzeugs 2 bereits dann einsetzt, wenn sich die Unterkante des Oberwerkzeugs 2 in einem Abstand h vom Unterwerkzeug 4 befindet. In diesem Punkt unterscheidet sich also der Parametersatz für den dritten Biegeschritt von den Parametersätzen des ersten und zweiten Biegeschritts.

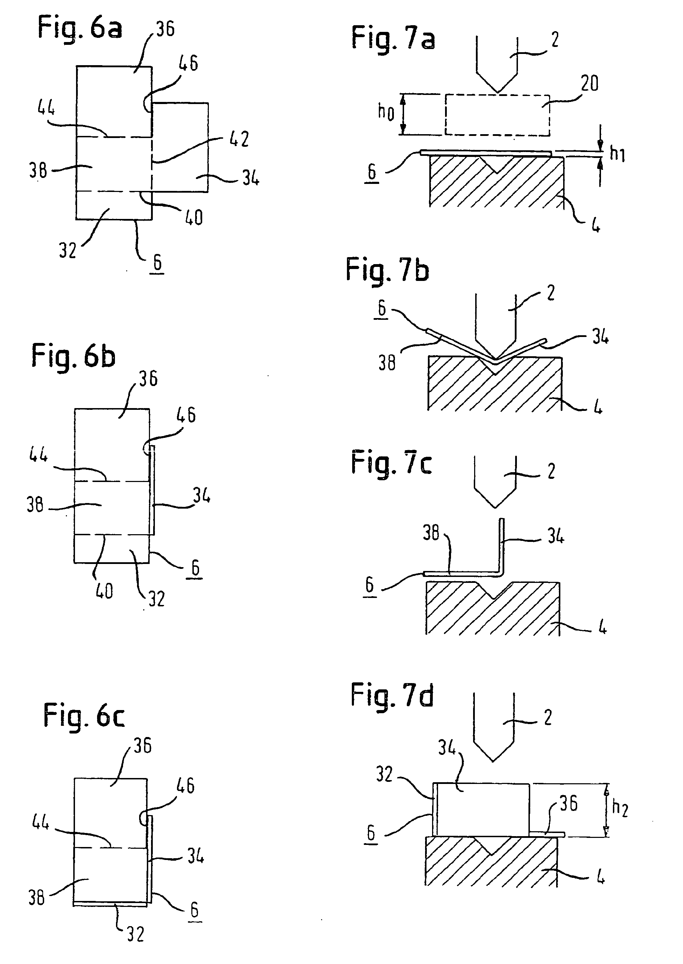

Fig. 6a zeigt die Draufsicht auf ein weiteres Werkstück 6, welches im Wesentlichen eine T-Form besitzt. Die drei rechteckförmigen Abschnitte 32, 34, 36 des Werkstücks 6 sollen gegenüber seiner Grundfläche 38 entlang der Biegelinien 40, 42, 44 um jeweils 90° nach oben gebogen werden. Um ein Hochbiegen des Abschnitts 36 entlang der Biegelinie 44 zu ermöglichen, ist in Verlängerung der Biegelinie 42 ein Einschnitt 46 zwischen den Abschnitten 36 und 34 vorgesehen.

Zum Hochklappen des Abschnitts 34 entlang der Biegelinie 42 wird das Werkstück 6 gemäß Fig. 7a in eine Biegepresse 2, 4 eingelegt. Unterhalb des Oberwerkzeugs 2 der Biegepresse ist ein Schutzfeld 20 ausgeformt, welches sich mit dem Oberwerkzeug 2 nach unten bewegt und dessen Höhe h₀ sich mit zunehmender Bewegung des Oberwerkzeugs 2 in Richtung des Unterwerkzeugs 4 verringert, um so zu vermeiden, dass das eingelegte Werkstück 6 einen Eingriff in das Schutzfeld 20 hervorruft. Diese Verkleinerung des Schutzfelds 20 während der Bewegung des Oberwerkzeugs 2 ist im Rahmen eines für den jeweiligen Biegeschritt typischen Parametersatzes hinterlegt. Dabei ist derjenige Zeitpunkt, zu dem eine Verringerung der Größe des Schutzfeldes 20 einsetzt, abhängig von der Dicke bzw. Höhe h₁ des Schattenrisses des Werkstücks 6. Je größer die Dicke bzw. Höhe h₁ des Schattenrisses des Werkstücks 6 beim Biegeschritt gemäß Fig. 7a ist, desto früher muss eine Verkleinerung des Schutzfeldes 20 einsetzen.

Wenn dann in der Folge im Rahmen des ersten Biegeschritts das Oberwerkzeug 2 das Werkstück 6 berührt, wird das Schutzfeld 20 deaktiviert und die Geschwindigkeit des Oberwerkzeugs 2 verlangsamt, so wie dies bereits in Verbindung mit Fig. 4 erläutert wurde. Bei einer weiteren Bewegung des Oberwerkzeugs 2 in Richtung des Unterwerkzeugs 4 erfolgt dann eine Verformung des Werkstücks 6 entsprechend Fig. 7b.

Nach Abschluss des ersten Biegeschritts wird das Oberwerkzeug 2 wieder angehoben, und anschließend besitzt das Werkstück 6 eine Form gemäß den Fig. 6b und 7c.

Während eines zweiten Biegeschritts wird der Abschnitt 32 ausgehend von der Form gemäß den Fig. 6b und 7c entlang der Biegelinie 40 um 90° nach oben gebogen. Im Anschluss an diesen zweiten Biegeschritt besitzt das Werkstück 6 eine Form entsprechend Fig. 6c. Hier sind die beiden Abschnitte 32, 34 gegenüber der Grundfläche 38 hochgeklappt.

Im Rahmen eines dritten Biegeschritts soll nun der Abschnitt 36 entlang der senkrecht zum Einschnitt 46 verlaufenden Biegelinie 44 um 90° nach oben gebogen werden. Hierzu muss das Werkstück 6 entsprechend Fig. 7d in die Biegepresse 2, 4 eingelegt werden. Aufgrund des bereits im Rahmen des ersten Biegeschritts hochgeklappten Abschnitts 34 erscheint der Schattenriss des Werkstücks 6 nun mit einer Höhe bzw. "Dicke" h₂, so dass nun im Rahmen des dritten Biegeschritts eine Verringerung der Höhe des Schutzfelds 20 früher einsetzen muss als beim ersten Biegeschritt. Weiterhin muss beim dritten Biegeschritt eine Deaktivierung des Schutzfelds 20 spätestens bereits dann vorgenommen werden, wenn die Unterkante des Oberwerkzeugs 2 sich in einem Abstand h₂ vom Unterwerkzeug 4 befindet. Zu diesem Zeitpunkt muss dann auch die Geschwindigkeit des Oberwerkzeugs 2 verringert werden. Alternativ kann das Oberwerkzeug 2 zu dem genannten Zeitpunkt aufgrund eines entsprechenden Parametersatzes für den dritten Biegeschritt auch angehalten werden, woraufhin es seine Bewegung nur nach doppelter Betätigung eines Fußschalters mit verringerter Geschwindigkeit fortsetzen kann.

Die erfindungsgemäßen Parametersätze für den ersten und den dritten Biegeschritt unterscheiden sich voneinander also zumindest im Zeitpunkt des Beginns der Verringerung der Höhe des Schutzfeldes 20, im Zeitpunkt der vollständigen Deaktivierung des Schutzfeldes 20 und dem Zeitpunkt der Verlangsamung der Geschwindigkeit des Oberwerkzeugs 2.

Erfindungsgemäß können die drei Biegeschritte gemäß den Fig. 6 und 7 durchgeführt werden, ohne dass die Bedienperson irgendwelche Einstellungen an der Biegepresse vornimmt, da durch die Hinterlegung der den drei Biegeschritten jeweils zugeordneten Parametersätze und die im Rahmen der Steuereinheit festgelegte Reihenfolge der Aktivierung dieser Parametersätze sichergestellt ist, dass die Biegepresse für jeden der einzelnen Biegeschritte jeweils korrekt und optimal eingestellt ist.

### Bezugszeichenliste

- 2: Oberwerkzeug
- 4: Unterwerkzeug
- 6: Werkstück
- 8: Öffnungsspalt
- 10: Haltearme
- 12: Sendeeinrichtung
- 14: Empfangseinrichtung
- 16: Lichtstrahl
- 18: Schutzfeld
- 20: Schutzfeld
- 22: Steuereinheit
- 24: Speicher
- 26: Werkstückabschnitt
- 28: Ausschnitt
- 30: Längsmittellinie und Biegelinie
- 32: Werkstückabschnitt
- 34: Werkstückabschnitt
- 36: Werkstückabschnitt
- 38: Grundfläche
- 40: Biegelinie
- 42: Biegelinie
- 44: Biegelinie
- 46: Einschnitt

## Patentansprüche

1. Verfahren zur Sicherung einer Biegepresse mit einem ersten Werkzeugteil (2), das im Rahmen einer Arbeitssequenz mehrere aufeinander folgende, jeweils einem Biegen eines Werkstücks dienende Arbeitsschritte in Richtung eines zweiten Werkzeugteils (4) ausführt, wobei ein optoelektronischer Sensor (12, 14) ein volumenförmiges, im Bereich eines zwischen den Werkzeugteilen (2, 4) ausgebildeten Öffnungsspalts (8) vorgesehenes Schutzfeld (18) überwacht, welches bei aufeinander folgenden Arbeitsschritten einer Arbeitssequenz voneinander verschiedene Abmessungen aufweist,
**dadurch gekennzeichnet,**
**dass** für jeden Arbeitsschritt ein Parametersatz gespeichert wird, welcher neben den Abmessungen des Schutzfeldes noch zumindest einen weiteren Parameter, nämlich den für den jeweiligen Arbeitsschritt erwarteten Schattenriss des Werkstücks im Bereich des Öffnungsspalts (8), aufweist, wobei in Abhängigkeit von den gespeicherten Parametern eine Ansteuerung der Biegepresse erfolgt.

2. Verfahren nach Anspruch 1,
**dadurch gekennzeichnet,**
**dass** in Abhängigkeit von den gespeicherten Parametern zu bestimmten Zeitpunkten oder bei bestimmten Positionen des ersten Werkzeugteils (2) die Geschwindigkeit des ersten Werkzeugteils (2) verlangsamt wird.

3. Verfahren nach einem der vorhergehenden Ansprüche,
**dadurch gekennzeichnet,**
**dass** als weiterer Parameter der für den jeweiligen Arbeitsschritt typischen Parametersätze eine Maximalgeschwindigkeit des ersten Werkzeugteils (2) bei teilweise oder komplett deaktiviertem Schutzfeld gespeichert wird.

4. Verfahren nach einem der vorhergehenden Ansprüche,
**dadurch gekennzeichnet ,**
**dass** als weitere Parameter der für den jeweiligen Arbeitsschritt typischen Parametersätze ein Geschwindigkeitsprofil des ersten Werkzeugteils (2) gespeichert wird.

5. Verfahren nach einem der vorhergehenden Ansprüche,
**dadurch gekennzeichnet,**
**dass** in Abhängigkeit von den gespeicherten Parametern zu bestimmten Zeitpunkten eines Arbeitsschritts oder bei bestimmten Positionen des ersten Werkzeugteils das Schutzfeld vollständig oder teilweise deaktiviert wird.

6. Verfahren nach einem der vorhergehenden Ansprüche,
**dadurch gekennzeichnet,**
**dass** als weiterer Parameter der Parametersätze ein für den jeweiligen Arbeitsschritt typisches Aktivierungssignal gespeichert wird.

7. Verfahren nach einem der vorhergehenden Ansprüche,
**dadurch gekennzeichnet,**
**dass** die Parametersätze einer Arbeitssequenz nur in einer definierten Reihenfolge aktivierbar sind und/oder dass die Parametersätze als weiteren Parameter einen Zeiger auf den jeweils nächsten Arbeitsschritt umfassen.

8. Verfahren nach einem der vorhergehenden Ansprüche,
**dadurch gekennzeichnet,**
**dass** die einzelnen Arbeitsschritte unter Aktivierung des dem jeweiligen Arbeitsschritt zugeordneten Parametersatzes durch Eingaben einer Bedienperson oder durch Signale einer Steuereinrichtung ausgelöst werden.

## Claims

1. A method of securing a bending press having a first tool part (2) which, within the framework of a work sequence, carries out a plurality of sequential worksteps in the direction of a second tool part (4) respectively serving for a bending of a workpiece, wherein an optoelectronic sensor (12, 14) monitors a three-dimensional protected field (18) which is provided in the region of an opening gap (8) formed between the tool parts (2, 4) and which has dimensions which differ from one another with sequential worksteps of a work sequence,
**characterised in that**
a set of parameters is stored for each workstep and has at least one further parameter in addition to the dimensions of the protected field, namely the silhouette of the workpiece expected for the respective workstep in the region of the opening gap (8), with a control of the bending press taking place in dependence on the stored parameters.

2. A method in accordance with claim 1, **characterised in that** the speed of the first tool part (2) is slowed down in dependence on the stored parameters at specific times or at specific positions of the first tool part (2).

3. A method in accordance with any one of the preceding claims, **characterised in that** a maximum speed of the first tool part (2) with a partially or completely deactivated protected field is stored as the further parameter of the sets of parameters typical for the respective workstep.

4. A method in accordance with any one of the preceding claims, **characterised in that** a speed profile of the first tool part (2) is stored as the further parameter of the sets of parameters typical for the respective workstep.

5. A method in accordance with any one of the preceding claims, **characterised in that** the protected field is completely or partly deactivated in dependence on the stored parameters at specific times of a workstep or at specific positions of the first tool part.

6. A method in accordance with any one of the preceding claims, **characterised in that** an activation signal typical for the respective workstep is stored as the further parameter of the sets of parameters.

7. A method in accordance with any one of the preceding claims, **characterised in that** the sets of parameters of a work sequence are only actuable in a defined order; and/or **in that** the sets of parameters include a pointer to the respective next workstep as a further parameter.

8. A method in accordance with any one of the preceding claims, **characterised in that** the individual worksteps are triggered by inputs of an operator or by signals of a control device while activating the set of parameters associated with the respective workstep.

## Revendications

1. Procédé pour sécuriser une presse plieuse munie d'une première partie d'outil (2) qui, dans le cadre d'une séquence de travail, exécute en direction d'une seconde partie d'outil (4) plusieurs étapes de travail consécutives servant chacune à un pliage d'une pièce à oeuvrer, dans lequel un capteur optoélectronique (12, 14) surveille un champ de protection (18) de forme volumétrique prévu dans la zone d'un intervalle d'ouverture (8) réalisé entre les parties d'outil (2, 4), champ qui présente des dimensions qui diffèrent les unes des autres pendant des étapes de travail consécutives d'une séquence de travail,
**caractérisé en ce que**
on mémorise pour chaque étape de travail un lot de paramètres qui présente, outre les dimensions du champ de protection, encore au moins un autre paramètre qui est le contour de la silhouette de la pièce à oeuvrer, escompté pour l'étape de travail respective dans la zone de l'intervalle d'ouverture (8), un pilotage de la presse plieuse ayant lieu en fonction des paramètres mémorisés.

2. Procédé selon la revendication 1,
**caractérisé en ce que**
en fonction des paramètres mémorisés, à certains instants ou dans certaines positions de la première partie d'outil (2), on ralentit la vitesse de la première partie d'outil (2).

3. Procédé selon l'une des revendications précédentes,
**caractérisé en ce que**
à titre d'autre paramètre parmi les lots de paramètres typiques pour l'étape de travail respective, on mémorise une vitesse maximale de la première partie d'outil (2) lorsque le champ de protection est désactivé partiellement ou complètement.

4. Procédé selon l'une des revendications précédentes,
**caractérisé en ce que**
à titre d'autre paramètre parmi les lots de paramètres typiques pour l'étape de travail respective, on mémorise un profil de vitesse de la première partie d'outil (2).

5. Procédé selon l'une des revendications précédentes,
**caractérisé en ce que**
en fonction des paramètres mémorisés, à certains instants d'une étape de travail ou dans certaines positions de la première partie d'outil, le champ de protection est désactivé complètement ou partiellement.

6. Procédé selon l'une des revendications précédentes,
**caractérisé en ce que**
à titre d'autre paramètre parmi les lots de paramètres, on mémorise un signal d'activation typique pour l'étape de travail respective.

7. Procédé selon l'une des revendications précédentes,
**caractérisé en ce que**
les lots de paramètres d'une séquence de travail ne sont activables que dans un ordre défini et/ou **en ce que** les lots de paramètres incluent en tant qu'autre paramètre un pointeur dirigé vers la prochaine étape de travail respective.

8. Procédé selon l'une des revendications précédentes,
**caractérisé en ce que**
les étapes de travail individuelles sont déclenchées avec activation du lot de paramètres associé à l'étape de travail respective par des entrées d'un opérateur ou par des signaux d'un dispositif de commande.
